# EUROPEAN PATENT APPLICATION

(11) **EP 4 830 524 A1**
(43) Date of publication of application: **28.10.2026**
(21) Application number: 25171996.9
(22) Date of filing: 23.04.2025
(51) Int. Cl.: A22C 11/00, B25J 15/00

(54) **MANIPULATING DEVICE**

(71) Applicant: Poly-clip System GmbH & Co. KG, 65795 Hattersheim (DE)
(72) Inventor: Jöst, Norbert, 65191 Wiesbaden (DE); Seelmann, Jan, 65795 Hattersheim a. M. (DE); Gerhardt, Lucas, 60528 Frankfurt (DE)
(74) Representative: Eisenführ Speiser

(57) **Abstract**

The present invention relates to a manipulating device (100) for receiving and supporting a horizontally oriented sausage-shaped product, and for releasing the sausage-shaped product, preferably on a storage place. The manipulating device (100) comprises at least two support elements (110, 112) for receiving and supporting a horizontally oriented sausage-shaped product, and a drive unit (120) for reversibly moving the support elements (110, 112), at least between a receiving position, in which a sausage-shaped product is received and supported, preferably from a clipping machine, and a release position, in which a sausage-shaped product is released from the manipulating device (100) onto a storage place, preferably a storage place of a storage frame. The present invention relates to a handling arrangement (200) for depositing horizontally oriented sausage-shaped products received from a clipping machine for producing sausage-shaped products, in a storage frame arranged in a loading position and having at least one storage place, the handling arrangement (200) comprises a manipulating device (100) according to the present invention.

## Description

The present invention relates to a manipulating device for receiving and supporting a horizontally oriented sausage-shaped product, and for releasing the sausage-shaped product, preferably on a storage place.

Sausage-shaped products, such as sausages, are produced in packaging machines, such as clipping machines, by feeding material, such as a flowable or granular filling material, into a tubular or bag-shaped packaging casing which is stored or supported on a filling tube. The ends of the tubular or bag-shaped packaging casing are closed by at least one closure means, such as closure clips.

If it is intended to store or deposit sausage-shaped products on a rod-like or rod-shaped element, such as a smoking rod, e.g. for further treatment such as cooking or smoking, suspension elements, such as suspension loops, can be attached to one end of the sausage-shaped products by closure clips that close the respective end of the sausage-shaped products. The sausage-shaped products are suspended on a rod-like element, which may be stored in a storage frame for further treatment.

However, it is also possible to store sausage-shaped products lying on a horizontally arranged storage plane of a storage frame, e.g. for storing large or heavy sausage-shaped products. In this case, it is not necessary to provide the sausage-shaped products with a suspension element.

Handling of horizontally oriented or lying sausage-shaped products is much more difficult than handling sausage-shaped products that are suspended by suspension loops. Dependent on the nature of sausage-shaped products, in particular the type of tubular casing and/or the kind of filling material, such as vulnerable casing and/or filling material and/or large and/or heavy sausage-shaped products, the risk exists that damages to the sausage-shaped products may occur caused by rolling or shifting the sausage-shaped products over a surface, or the products bumping into each other or into an element of the storage frame.

From US patent 7,563,158, a system for loading sausage-shaped products onto a storage rack is known. The system comprises a rack loading apparatus which is a conveyor having a loading side for receiving products and an unloading side for discharging products, a positioner to align a rack with the unloading side, and a load pusher to discharge the products from the unloading side of the conveyor onto the rack.

Thus, an object of the present invention is to overcome the above mentioned drawbacks and to provide a manipulating device and a handling arrangement for receiving and supporting horizontally oriented sausage-shaped products that reduce the risk of damage to the products during handling and makes handling sausage-shaped products safer.

According to the present invention, there is provided a manipulating device for receiving and supporting a horizontally oriented or lying sausage-shaped product, and for releasing a sausage-shaped product. The manipulating device comprises at least two support elements for receiving and supporting a horizontally oriented sausage-shaped product, and a drive unit, preferably an electric motor and further preferably an electric servo motor, for reversibly moving the support elements at least between a receiving or pick-up position, in which a sausage-shaped product is received and supported, preferably from a clipping machine, and a release position, in which a sausage-shaped product is released from the manipulating device onto a storage place or location, preferably a storage place of a storage frame.

The provision of at least two support elements or supporting elements, movable between a receiving or pick-up position and a release position, eliminates the need to slide or shift the sausage-shaped products over a surface, thus reducing the risk of damage to the sausage-shaped products.

The release position is preferably determined by the diameter of a sausage-shaped product to be handled. Of course, other or additional parameters can also be taken into account. The product can be deposited by evenly moving apart the supporting elements so that a product can be slowly and evenly deposited on a designated storage location, i.e. the product slides gently down between the supporting elements that are moving apart or have moved apart, in the direction of the storage location.

The receiving position is preferably determined depending on a product to be handled. For a product with a very small diameter, the receiving position can be achieved with the supporting elements fully together, i.e. touching each other. It is also possible that the supporting elements have a distance in the receiving position, measured perpendicular to their center line. The distance can be selected depending on the diameter of a product to be handled. Of course, other or additional parameters can also be taken into account.

In a preferred embodiment of the inventive manipulating device, the support elements are bar-shaped elements, arranged at least approximately horizontally and parallel to each other in a common plane oriented at least approximately horizontally, whereby the size of the contact area between the support elements and a sausage-shaped product, and thus, the risk of damages may further be reduced.

The support elements may have any suitable cross-sectional shape. However, it is further preferred that the support elements have oval or circular cross-sectional shapes. It is preferred that the support elements, at least in the contact area with the sausage-shaped products, have no sharp edges or the like. Hence, it is possible that the support elements can have any cross-sectional shape outside the area of contact between a product and the support elements wherein the cross-sectional shape of each support element can be different.

In an advantageous configuration, the drive unit is adapted to reversibly move the support elements from each other between the receiving position and the release position. This allows sausage-shaped products to be placed gently on the storage place without putting any strain on the casing material and/or affecting the filling material.

In a further advantageous configuration, the movement of the support elements is guided by a forced guide or guidance system. This enables a reliable and constant handling of sausage-shaped products.

In a further advantageous configuration, the support elements have first ends and second ends, and the second ends are coupled to the drive unit, with guide cams arranged at their second ends. Guide cams enable a smooth movement of the support elements, further reducing the risk of damage.

In this configuration, it is of advantage that the drive unit includes a cam plate having a central axis and being rotary driven by a drive motor, e.g. an electric motor or servo motor, the cam plate comprising a first guide groove in which a guide cam of the first support element engages, and a second guide groove in which a guide cams of the second support element engages. This causes the support elements to move along paths of motion that are defined by the shape or form/design of the guide grooves.

In an advantageous design, the manipulation device comprises a lever arrangement having two pivot levers, each having a first and a second end, the first ends of the pivot levers being pivotally coupled or connected to each other to form a common pivot point, and the support elements being coupled or connected to the second ends of the pivot levers near or in the region of their second ends. The pivot levers support the support elements during their pivoting movement and provide an additional guidance for the support elements.

The guide grooves in the cam plate may have any suitable shape. Preferably, the first and the second guide grooves have an at least approximately arcuate shape, with first ends being located in the region of or close to the centre of the cam plate and second ends terminating at the outer circumference or periphery of the cam plate. The arc over which the grooves extend is preferably continuous. The radius of the arc can be constant or variable or combinations thereof, i.e. one or several sections of the arc have constant radii and another sections have variable radii. Preferably, the radius can be reduced continuously or discontinuously from the second end at the outer circumference of the cam plate to the first end near the center of the cam plate. Preferably, the first and the second guide grooves have an arcuate shape and preferably at least approximately the shape of an involute.

The radii of the two grooves can also change differently and/or unevenly. The angle or angular dimension over which the grooves extend is determined, inter alia, by the path of movement of the support elements. The angle may preferably extend between approximately 45° and approximately 270° and more preferably between approximately 90° and approximately 180°, although other angular ranges or angle values are also possible. In a preferred embodiment, the angle values of both grooves are approximately 180°. It is also feasible for the angle ranges or single angle values of the two grooves to be different. This configuration allows the support elements to move gently in a smooth path, further reducing the risk of damage to the sausage-shaped products.

In a preferred embodiment, the cam plate is rotated about an angle of approximately 90° to move the support elements between a position in which the support elements have reached a minimum distance from each other, preferably for receiving a sausage-shaped product (receiving position), and a position in which the support elements have reached their maximum distance, preferably to release a sausage-shaped product for depositing (release position). This configuration provides an optimal ratio between the movement of the cam plate and the movement of the support elements and thus an optimal handling time. However, dependent on the shape of the guide grooves, other angles of rotation of the cam plate may be realized to reversibly move the support elements between their minimum distance and their maximum distance.

In a further preferred embodiment, in the position in which the support elements have reached the minimum distance to each other, the first ends of the guide grooves are arranged at least approximately horizontally and below the central axis of the cam plate.

It is further of advantage that, in the position in which the support elements have reached the maximum distance to each other, the second ends of the guide grooves are arranged at least approximately horizontally and above the central axis of the cam plate.

It is also possible that the cam plate is provided with a single guide groove, which is a combination of the first and second guide groove, that are connected by their first ends, i.e. the ends facing towards the centre of the cam plate. Such a single guide groove provides the same functionality as the first and second guide grooves, but may be easier be manufactured, in a single manufacturing step.

In these configurations, jamming of the guide cams in the guide grooves is prevented due to an optimized angle of the force acting on the guide cams.

In an advantageous design, the distance between the support elements in the receiving position and in the release position may be adapted dependent on the size or diameter of the sausage-shaped product to be manipulated. This allows to handle a great variety of sausage-shaped products by the manipulating device.

As mentioned above, the distance of the support elements in the release position takes into account the maximum diameter of a sausage-shaped product to be handled. The release position for a certain type of sausage-shaped products can be reached before the support elements have moved to their maximum distance. A corresponding stop parameter for the drive unit can be entered into a control unit controlling the movement of the support elements. Alternatively or additionally, stop components can be provided which have to be set manually.

Independently or in coordination with the adjustment of the release position and/or depending on the type of a sausage-shaped product to be handled, the receiving position can be adjusted by means of a corresponding parameter that can be entered into a control unit for controlling of the manipulating device. As mentioned above, the minimum position can be reached when the two supporting elements abut to each other. Other distances of the support elements in the receiving position are also possible wherein the distance between the support elements is determined by preventing the sausage-shaped product from slipping between the support elements.

The movement of the support elements and/or the cam plate can be monitored by sensors. Sensors can be provided for when the maximum and/or minimum distance of the supporting elements, or any other location between the maximum and minimum position, is reached, for example in the form of contact sensors or proximity sensors. Alternatively or in addition, a rotary encoder can also be provided on the drive unit, e.g. for monitoring the movement of the motor or the cam plate.

The distance between the support elements in the receiving position and/or the release position may be adapted in different ways. It is possible to exchange the cam plate by another cam plate that has guide grooves of another shape. In a simple case, for varying the distance between the support elements in the receiving position and/or the release position, the angle of rotation of the cam plate may be varied.

In a further advantageous design, the manipulating device further comprises a guide block including guide grooves in which the second ends of the pivot levers engage, for guiding the second ends of the pivot lever. This improves and supports the guidance of the pivot levers as well as the support of the support elements.

The inventive manipulating device may be controlled in various ways. In a preferred embodiment, the manipulating device comprises a control unit adapted to control at least the operation of the manipulating device. This may include the time points for activating the drive unit, or the angle about which the cam plate is rotated.

Naturally, in the case that the inventive manipulating device is part of a system, like a handling arrangement for depositing horizontally oriented sausage-shaped products in a storage frame, the manipulating device controlled by a control unit of said handling arrangement, or the control unit of the manipulating device may be coupled thereto.

In order to enable a save operation, the manipulating device may further comprise a sensor arrangement including at least one sensor device for at least detecting the presence or absence of a sausage-shaped product in the manipulating device.

As mentioned previously, the manipulating device may comprise further sensor devices, which e.g. detect the movement of the drive unit or an angle or angular position of the cam plate. Based on the signals received from the sensor devices, the manipulating device may be operated. The operation of the manipulating device may be continued in the case that the sensor signals are in a permissible range, or be stopped if a sensor signal exceeds the permissible range.

According to the present invention, there is further provided a handling arrangement for depositing horizontally oriented sausage-shaped products received from a clipping machine for producing sausage-shaped products, in a storage frame arranged in a loading position and having at least one storage place. The handling arrangement comprises a manipulating device according to the present invention. The handling arrangement thereby realizes all advantages explained in conjunction with the inventive manipulating device.

In a preferred embodiment, the handling arrangement further comprises a transfer arrangement for transferring a horizontally oriented sausage-shaped product discharged from a clipping machine, to the handling arrangement. The transfer arrangement enables a safe take-over of a sausage-shaped product from a clipping machine as well as a safe take-over of a sausage-shaped product to the manipulating device.

Preferably, the transfer arrangement further includes an infeed conveyor for feeding a sausage-shaped product towards the handling arrangement. The infeed conveyor may be provided with separation elements for separating subsequent sausage-shaped products on the infeed conveyor. A separation element may be a flat plate extending from the surface of the infeed conveyor, thereby forming compartments in each of which one sausage-shaped product may be accommodated.

In a further preferred embodiment of the handling arrangement, the transfer arrangement includes a receiving conveyor for receiving a sausage-shaped product discharged from a clipping machine. The receiving conveyor, the conveying direction of which is aligned to the discharge direction of a respective discharge conveyor of a clipping machine, may place a sausage-shaped product taken over from the clipping machine, in a defined position relative to the infeed conveyor.

Advantageously, the transfer arrangement further includes a pusher assembly, for pushing a sausage-shaped product received by the receiving conveyor in the infeed direction onto the infeed conveyor. The pusher assembly enables a secure transfer of a sausage-shaped product onto the infeed conveyor, and at a desired time point, such that a sausage-shaped product is positioned on a desired portion of the infeed conveyor, like a desired compartment formed by separation elements on the surface of the infeed conveyor.

Further advantageously, the handling arrangement comprising a storage frame positioning arrangement, for positioning a storage frame or carriage in a loading position. The storage frame positioning arrangement thereby ensures the accurate position of a storage frame during the loading process.

In this embodiment, it is further of advantage that the storage frame positioning arrangement comprises a storage frame moving unit for moving the storage frame from a first loading position into an at least second loading position. The storage frame moving unit moves the storage frame in a manner that more than one sausage-shaped product may be stored on the same storage plane, and with a defined distance to the neighbouring sausage-shaped product or to an element of the storage frame, like a vertical corner post.

Preferably, the storage frame positioning arrangement includes a storage frame securing assembly, for securing the storage frame on the storage frame moving unit. Particularly during moving the storage frame moving unit, the storage frame securing assembly prevents the storage frame from tilting, and holds the storage frame in a defined position on the storage frame moving unit.

It is further preferred that the storage frame positioning arrangement includes a storage frame alignment unit, for aligning the storage frame at least in an insertion position and/or a removal position. By the storage frame alignment unit, the storage frame may be held in a defined position, in which an empty storage frame may be securely be taken over by the storage frame moving unit, and in which a loaded storage frame may securely be released from the storage frame moving unit.

In preferred embodiment, the inventive handling arrangement comprises a control unit adapted for controlling the operation of at least the handling arrangement. The control unit may be a single unit which controls all components and assemblies of the handling arrangement. It is also possible that selected assemblies or units may have their own control unit, which is connected to the control unit of the handling arrangement. The control unit of the handling arrangement can also be connected to control units or devices of other production devices for sausage-shaped products that are intended for use in production, either before or after the handling arrangement, with either one of these control units or the control unit of the handling device being a master control unit.

In particular, the control unit of the handling arrangement may be adapted to coordinate the operation of the loading arrangement with the operation of a clipping machine. Hence, the production process and the handling operation may be synchronized or adapted to each other. Moreover, in case of a malfunction or failure of the handling arrangement or the clipping machine, the defective machine or arrangement as well as the respective other arrangement or machine may be stopped for preventing unnecessary losses or damages to the handling arrangement or the clipping machine.

However, it is also possible that the handling arrangement, or its control unit, is coupled to the control unit of a clipping machine, such that the operation of the handling arrangement is controlled by the control unit of the clipping machine.

Further advantages and preferred embodiments of the present invention will be described in the following together with the drawings listed below. The expressions *"left", "right", "below"* and *"above"* used in the following description, are referred to the drawings in an alignment such that the reference numbers and the notation of the figures used can be read in normal orientation.
- Fig. 1:: is a perspective view of a manipulating device according to the present invention, with support elements in a receiving position;
- Fig. 2:: is a perspective view of the manipulating device according to Fig. 1, with the support elements in a release position;
- Fig. 3:: is a perspective view to the manipulating device according to Fig. 2, in which, for the sake of clarity, individual components of the device are not shown;
- Fig. 4:: is a front view to a cam plate of the manipulating device in a release position according to Figs. 2 and 3;
- Fig. 5:: is a front view to the cam plate of the manipulating device in a receiving according to Fig. 1; and
- Fig. 6:: is a perspective view to a handling arrangement, which includes the manipulating device according to the present invention.

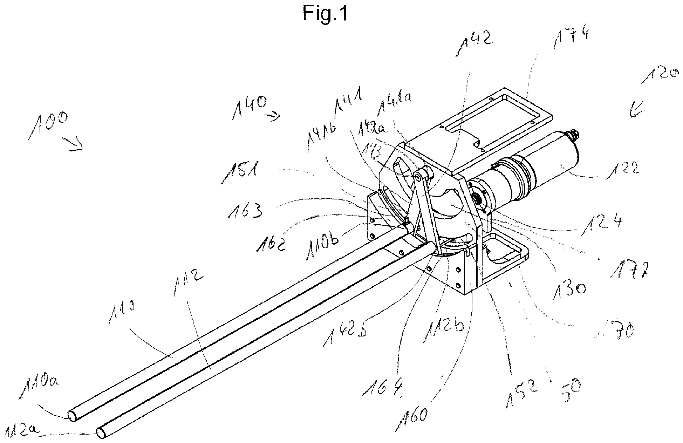

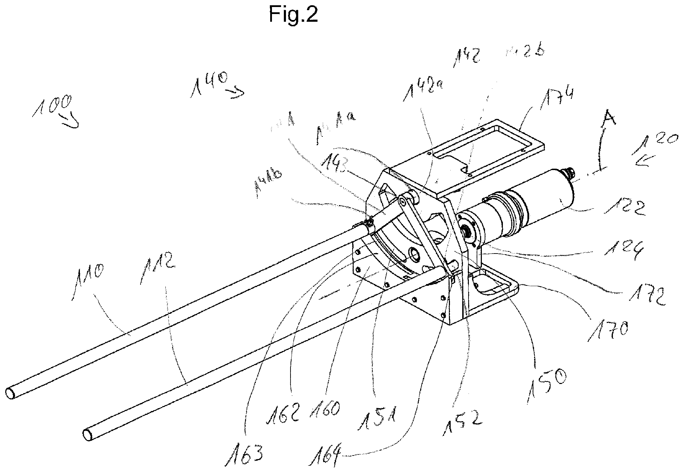

Figs. 1 and 2 show a perspective view to a manipulating device 100 according to the present invention.

Manipulating device 100 comprises two horizontally arranged bar-shaped elements or rods 110, 112. Rods 110, 112, which have left ends 110a, 112a and right ends 110b, 112b, are arranged at least approximately parallel to each other and in a common horizontal plane.

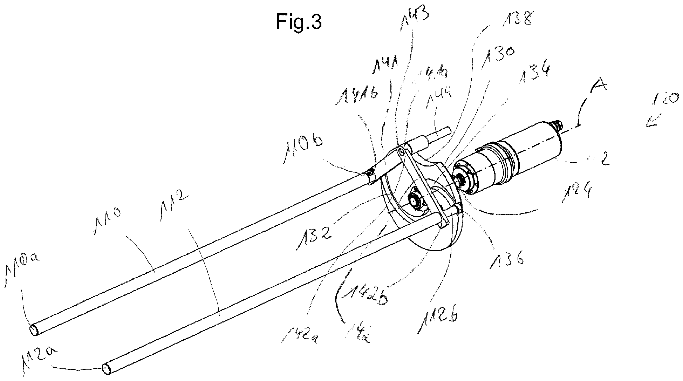

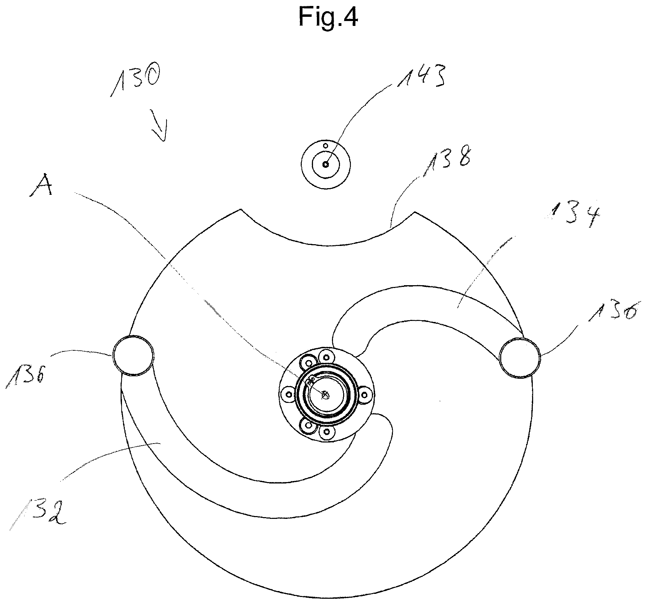

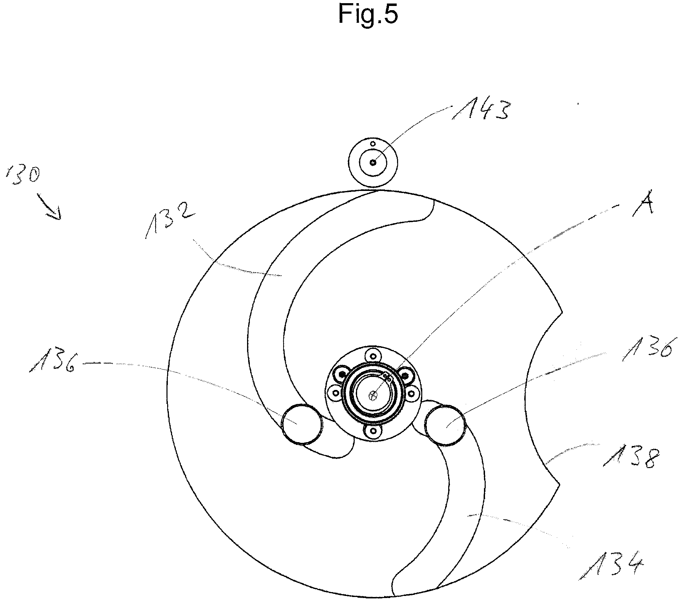

In Fig. 1, rods 110, 112 are in a receiving position, in which rods 110, 112 have their minimum distance to each other, as will be explained in detail in conjunction with Fig. 5. In Fig. 2, rods 110, 112 are in a release position. In Fig. 2, rods 110, 112 have their maximum distance to each other, as will be explained in detail in conjunction with Figs. 3 and 4.

Manipulating device 100 further comprises a drive unit 120 which includes a drive motor 122 having a motor shaft 124 for reversibly driving rods 110 between a release position and a receiving position. Drive motor 122 can preferably be an electric motor and further preferably an electric servo motor.

As seen in Fig. 3, drive unit 120 further includes a cam plate 130 that is coupled to motor shaft 124 of drive motor 122 to be rotated by drive motor 122. Cam plate 130 has an approximately circular shape and a central axis A about which cam plate 130 may be driven or rotated by drive motor 122. Axis A extends coaxially with the axis of rotation of shaft 124 and motor 122.

In cam plate 130, two arc-shaped guide grooves 132, 134 are arranged, a first guide groove 132, into which right end 110b of support element 110 extends, and a second guide groove 134, into which right end 112b of support element 112 extends. At right ends 110b, 112b of rods 110, 112, guide cams 136 are arranged, for guiding right ends 110b, 112b of rods 110, 112 along the flanks of guide grooves 132, 134. In Fig. 3, only guide cam 136 at right end 112b of support element 112 is visible.

The specific shape and function of first and second guide grooves 132, 134 will be explained in conjunction with Figs. 4 and 5 below.

Cam plate 130 includes a recess 138 at its outer circumference. In Fig. 3. which shows cam plate 130 with support elements 110, 112 in a release position, recess 138 is positioned vertically above central axis A, whereas, in Fig. 5 that shows support elements 110, 112 in a receiving position, recess 138 is positioned at the right side of cam plate 130, which has been turned clockwise about an angle of approximately 90° relative to the position shown in Fig. 3. Recess 138 provides an assembly aid, for simplifying or supporting assembling or disassembling of manipulating device 100.

Manipulating device 100 further includes a lever arrangement 140 including a first lever 141 and a second lever 142. Levers 141, 142 have first ends 141a, 142a, and second ends 142b, 142b. Levers 141, 142 are pivotally coupled to each other by their first ends 141a, 142a, and form a common pivot point 143, which is arranged vertically above central axis A of cam plate 130. Levers 141, 142 may pivot about a pivot axis that extends through a pivot shaft 144, which is aligned parallel to central axis A of cam plate 130 (cf. Fig. 3).

As particularly seen in Fig. 3, in the region of their right ends 110b, 112b, rods 110, 112 are coupled to second ends 141b, 142b of levers 141, 142. Accordingly, second ends 141b, 142b of levers 141, 142 follow the movement of rods 110, 112 between a release position and a receiving position, whereby levers 141, 142 pivot about pivot point 143.

Between cam plate 130 and levers 141, 142 of lever arrangement 140, a support plate 150 is arranged parallel to cam plate 130. Pivot shaft 144 is supported by support plate 150. Support plate 150 further comprises two arc-shaped slots 151, 152, which are arranged such that right ends 110b, 112b of rods 110, 112 extend there through and into first and second guide grooves 132, 134 in cam plate 130.

During rotation of cam plate 130 rods 110, 112, dependent on the specific shape of first and second guide grooves 132, 134, are guided along a continuous or discontinuous path between the receiving position and the release position. Arc-shaped slots 151, 152 have a shape which replicates this path of rods 110, 112, such that rods 110, 112 are guided in slots 151, 152 of support plate 150.

In the case that guide grooves 132, 134 in cam plate 130 have the shape of involutes, rods 110, 112 are moved on circular paths, the centre of which coincides with pivot point 143 of levers 141, 142, arc-shaped slots 151, 152 have a semi-circular shape with a common centre-point which coincides with pivot point 143 of levers 141, 142, such that rods 110, 112 are guided through slots 151, 152, when moved between the release position and the receiving position.

Manipulating device 100 further comprises a guide block 160 mounted to support plate 150 below lever arrangement 140, as shown in Figs. 1 and 2. Guide block 160 is of a generally cuboid shape, and has a semi-circular curved upper surface 162, the centre-line of which coincides with the centre-line of pivot shaft 144. In semi-circular curved surface 162, a first guide slot 163 is arranged, into which second end 141b of first lever 141 extend, and a second guide slot 164, into which second end 142b of second lever 142 extend. Guide slots 163, 164 of guide block 160 extend at least approximately perpendicular to axis A and are aligned parallel to support plate 150, with an offset between first guide slot 163 and second guide slot 164, such that first guide slot 163 is arranged closer to support plate 150 about a length which corresponds to the distance between first and second lever 141, 142 seen in a direction along central axis A.

At the lower end of mounting plate 150 and opposite to guide block 160, a drive unit support platform 170 is mounted. Drive unit support platform 170 is horizontally arranged and supports a motor mounting bracket 172 to which motor 122 is mounted. Drive unit support platform 170 further supports a cam plate bearing (not shown).

A manipulating device mounting plate 174 is arranged at the upper end of mounting plate 150, for mounting manipulating device 100 to a component, like a drive unit of a handling arrangement. Manipulating device mounting plate 174 is horizontally arranged, and extends from mounting plate 150 in a direction opposite to support elements 110, 112. It has to be noted that manipulating device mounting plate 174, for securely mounting manipulating device 100 to said component, may have any other suitable shape, like a U-shape or a bar-shape.

As can be seen in Figs. 4 and 5, guide grooves 132, 134 have first ends 132a, 134a, and second ends 132b, 134b, and an at least approximately arc shape. More precisely, in the embodiment of Figs. 4 and 5, the radii of guide grooves 132, 134 get continuously larger in a direction towards the outer circumference of cam plate 130. Guide grooves 132, 134 starting close to the centre of cam plate 130, running clockwise outwards and terminating at the outer circumference of cam plate 130. The radius of first guide groove 132 is larger than the corresponding radius of second guide groove 134, and thus, also the length of first guide groove 132 is larger than the length of second guide groove 134. The angle between the inner ends or starting points of guide grooves 132, 134 is less than 180°, in the present embodiment, the angle between the inner ends or starting points of guide grooves 132, 134 is approximately 110°. Also, the angle between the outer ends of guide grooves 132, 134 is less than 180°, in the embodiment shown in Figs. 4 and 5, the angle between the outer ends or starting points of guide grooves 132, 134 is approximately 160°. Preferably, each of first and second guide grooves 132, 134 has the shape on an involute.

Fig. 4 shows cam plate 130 in a position, in which support elements 110, 112 are in a release position, with the maximum distance there between. In this position, support elements 110, 112, or guide cams 136 respectively, are positioned at the outer ends of guide grooves 132, 134 at the outer circumference of cam plate 130. Support elements 110, 112 are positioned in a horizontal plane above central axis A of cam plate 300.

In the situation shown in Fig. 5, cam plate 130 is in a position, in which support elements 110, 112 are in a receiving position, with the minimum distance there between. In this position, support elements 110, 112 are positioned at the inner ends of guide grooves 132, 134 close to the centre of cam plate 130. Support elements 110, 112 are positioned in a horizontal plane below central axis A of cam plate 300.

For reversibly moving support elements 110, 112 from the release position according to Fig. 4 into the receiving position shown in Fig. 5, cam plate 130 is turned clockwise by drive motor 122 about an angle of approximately 90°. Due to the specific shape of guide grooves 132, 134, during this rotation of cam plate 130, guide cams 136 slide in guide grooves 132, 134 towards the centre of cam plate 130, each along a path which coincides with the shape of arc-shaped slots 151, 152 in support plate 150. the centre-point of which coincides with pivot point 143 of first and second levers 141, 142. By rotating cam plate 130 counter-clockwise about an angle of approximately 90°, support elements 110, 112 are moved from the receiving position shown in Fig. 5 into the release position according to Fig. 4.

In the case that first and second guide grooves 132, 134 have the shape of an involute, upon rotation of cam plate 130, guide cams 136 move along a semi-circular path relative to support plate 150, and slots 151, 152 in support plate 150 have a corresponding semi-circular shape, such that support elements 110, 112 are guided along corresponding semi-circular paths about pivot point 143 of first and second levers 141, 142.

It has to be noted that, caused by the specific design of guide grooves 132, 134, in each position between the release position of Fig. 4 and the receiving position of Fig. 5, support elements 110, 112 are arranged in a horizontal plane.

It has further to be noted that the positions of support elements 110, 112 shown in Figs. 4 and 5, are the extreme positions, in which support elements 110, 112 have their maximum distance (Fig. 4) and their minimum distance (Fig. 5) between each other.

The distance between support elements 110, 112 in the receiving position and in the release position may be adapted to the sausage-shaped product to be manipulated by manipulating device 100, in particular, to its diameter, such that a sausage-shaped product is securely supported by support elements 110, 112 in the receiving position, and that a sausage-shaped product may securely be released from support elements 110, 112.

The distance between support elements 110, 112 in the release position may be adjusted by selecting the starting angle of cam plate 130, measured clockwise from the angle of cam plate 130 as shown in Fig. 4. In Fig. 4, where the starting angle is approximately 0° measured from the vertical line through central axis A, support elements 110, 112 have the maximum distance between each other. By selecting a starting angle larger than 0°, when measured clockwise, the distance between support elements 110, 112 in the release position may be reduced.

The distance of support elements 110, 112 in the receiving position is adjusted by selecting a specific angle, measured from the starting angle, and about which cam plate 130 is rotated clockwise. By selecting a rotation angle that is less than the difference between 90° and the starting angle, the distance between support elements 110, 112 in the receiving position may be reduced.

Manipulating device 100 may comprise its own control unit, which controls the operation of manipulating device 100, like the operation of drive unit 120 for moving support elements 110, 112 between the release position and the receiving position.

It is also possible that manipulating device 100, e.g. when being part of a larger assembly for handling sausage-shaped product, is controlled by a control unit of said assembly, or that the control unit of manipulating device 100 is coupled to the control unit of said assembly.

Manipulating device 100 further comprises a sensor arrangement (not shown), which includes at least one sensor device for at least detecting the presence or absence of a sausage-shaped product in manipulating device 100. Said sensor device may include at least one sensor element, like an optical sensor or a proximity sensor, which is arranged close to one or both of support elements 110, 112, for detecting whether or not a sausage-shaped product is positioned on support elements 110, 112, to be manipulated, or whether said sausage-shaped product has successfully released from support elements 110, 112.

A further sensor device may be provided for detecting the angle of rotation or the angular position of cam plate 130, for estimating the current distance between support elements, or the distance between support elements 110, 112 in the release position and the receiving position, e.g. when adjusting said distances.

It has to be understood that the sensor assembly is coupled to the control unit of manipulating device 100, for controlling the operation of manipulating device on the basis of the signals received from the sensor arrangement.

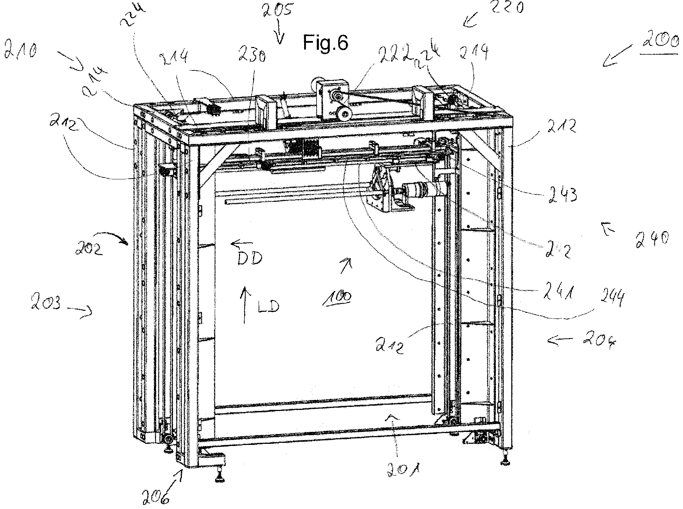

Fig. 6 is a perspective view to a handling arrangement 200, which includes a manipulating device 100 according to the present invention.

Handling arrangement 200, preferably for depositing horizontally oriented sausage-shaped products received from a clipping machine in a storage such as a storage frame or a storage carriage, has an approximately cuboid shape, with a front side 201, a rear side 202, a left side 203, a right side 204, a top side 205 and a bottom side 206.

Handling arrangement 200 includes a frame work 210, which forms an approximately cuboid frame, and which comprises four vertical corner posts 212 and four horizontal connecting bars 214, which connect the upper ends of corner posts 212.

Inside frame work 210, manipulating device 100 is arranged, with support elements 110, 112 facing towards left side 203 and drive unit 120 being directed to right side 204 of handling arrangement 200.

Handling arrangement 200 comprises a vertical drive unit 220 for reversibly vertically moving manipulating device 100 in a lifting direction LD. First drive unit 220 includes a drive device in the form of an electric motor 222, preferably a servo motor, supported on the top side 205 of handling arrangement 200, and transmission means which include two transmission shafts 224, which are arranged between the upper ends of corner posts 212, and which extend parallel to each other and from front side 101 to rear side 102 of handling arrangement 200, and which are driven by motor 222. The transmission means of first drive unit 220 further includes transmission elements, like transmission belts or spindles arranged along corner posts 210, to which a horizontally oriented mounting platform 230 is fixed, and via which mounting platform 230 may reversibly vertically be moved inside frame work 210.

Handling arrangement 200 further comprises a horizontal drive unit 240 for horizontally moving manipulating device 100 in a depositing direction DD, for positioning a sausage-shaped product above a storage place of a storage frame, which is positioned in a loading position on left side 203 of handling arrangement 200, and releasing a sausage-shaped product thereon.

Second drive unit 240 comprises two guide bolts 241 arranged horizontally below mounting platform 230, and which extend between left and right side 203, 204 of handling arrangement 200 inside frame work 210. A mounting plate 242 is slidable coupled to guide bolts 241 from below. Mounting plate 242 is coupled to a drive 243, which may be an electric motor, via a transmission belt 244. Mounting plate 242 is reversibly shiftable along guide bolts 242.

Manipulating device 100 is fixed to the lower side of mounting plate 242 by mounting plate 174, such that manipulating device 100 may be shifted towards left side 203 of handling arrangement 200, until support elements 110, 112 exceed left side 203 at least about a length which enables to release a sausage-shaped product onto a storage place of a storage frame positioned in a loading position on left side 203 of handling arrangement 200.

For manipulating a sausage-shaped product by manipulating device 100, support elements 110, 112 of manipulating device 100 are positioned in a receiving position, in which the distance between support elements 110, 112 is smaller than the diameter of a sausage-shaped product to be manipulated, such that said sausage-shaped product is securely held and supported by support elements 110, 112.

A sausage-shaped product is fed to manipulating device 100, and onto support elements 110, 112 in the receiving position. In the case that manipulating device 100 is part of a handling arrangement 200, a sausage-shaped product to be manipulated may be fed to manipulating device 100 by a feeding device, like an infeed conveyor, positioned in front of handling arrangement 200. For securely receiving a sausage-shaped product from an infeed conveyor, manipulating device 100 is arranged in a height corresponding to the end of the infeed conveyor being directed to manipulation device 100.

Manipulating device 100 is then moved into a position in front of a storage plane of a storage frame, e.g. manipulating device 100 is lifted in lifting direction LD by vertical drive unit 220 of handling arrangement 200 to a height corresponding to the height of a selected storage plane of a storage frame in the loading position. Then, manipulating device 100 is moved towards storage frame until manipulating device 100 or at least supporting elements 110, 112 are positioned above the selected storage plane. Support elements 110, 112 are moved from the receiving position into the release position, whereby a sausage-shaped product is placed on the storage plane of the storage frame. Thereafter, manipulating device 100 is retracted by horizontal drive unit 240 into frame work 210 and vertically downwards into the position in front of the infeed conveyor. During this movement or thereafter, support elements 110, 112 are moved back into the receiving position, such that manipulating device 100 is ready for receiving a next sausage-shaped product to be manipulated.

## Claims

1. A manipulating device (100) for receiving and supporting a horizontally oriented sausage-shaped product, and for releasing the sausage-shaped product the manipulating device (100) comprises:
at least two support elements (110, 112) for receiving and supporting a horizontally oriented sausage-shaped product, and
a drive unit (120) for reversibly moving the support elements (110, 112) at least between a receiving position, in which a sausage-shaped product is received and supported, preferably from a clipping machine, and a release position, in which a sausage-shaped product is released from the manipulating device (100) onto a storage place, preferably a storage place of a storage frame.

2. The manipulating device (100) according to claim 1,
wherein the support elements (110, 112) are bar-shaped elements, arranged at least approximately horizontally and parallel to each other in a common plane oriented at least approximately horizontally, preferably wherein the bar-shaped elements (110, 112 have oval or circular cross-section.

3. The manipulating device (100) according to any of claims 1-2,
wherein the drive unit (120) is adapted for reversibly moving the support elements (110, 112) from each other between the receiving position and the release position.

4. The manipulating device (100) according to any of claims 1-3,
wherein the movement of the support elements (100) is guided by forced guidance.

5. The manipulating device (100) according to claim 4,
wherein the support elements (110, 112) have first ends and second ends (110a, 112a; 110b, 112b), and
wherein the second ends (110b, 112b) are coupled to the drive unit (120), with guide cams (136) being arranged at their second ends (110b, 112b).

6. The manipulating device (100) according to claim 5,
wherein the drive unit (120) includes a cam plate (130) having a central axis (A) and being rotary driven by a drive motor (122), and
wherein the cam plate (130) includes a first guide groove (132) into which a guide cam (136) of the first support element (110) engages, and a second guide groove (134) into which a guide cam (136) of the second support element (112) engages.

7. The manipulating device (100) according to any of claims 5-6,
further comprising a lever arrangement (140) including two pivot levers (141, 142) each having a first and a second end (141a, 142a; 141b, 142b), and being pivotally coupled to each other by their first ends (141a, 142a), thereby forming a common pivot point (143),
wherein the support elements (110, 112) are coupled to the second ends (141b, 142b) of the pivot levers (141, 142) in the region of their second ends (110b, 112b),
preferably wherein the first and the second guide grooves (132, 134) have an at least approximately arcuate shape, with first ends being arranged close to the centre of the cam plate (130) and second ends terminating at the outer circumference of the cam plate (130), and
further preferably wherein the first and the second guide grooves (132, 134) have at least approximately the shape of an involute.

8. The manipulating device (100) according to any of claims 6-7,
wherein the cam plate (130) is rotated about an angle of approximately 90° for moving the support elements (110, 112) between a position in which the support elements (110, 112) have reached a minimum distance to each other, to a position in which the support elements (110, 112) have reached their maximum distance.

9. The manipulating device (100) according to claim 8,
wherein, in the position in which the support elements (110, 112) have reached the minimum distance to each other, the first ends of the guide grooves (132, 134) are arranged at least approximately horizontally and below the central axis (A) of the cam plate (130).

10. The manipulating device (100) according to any of claims 8-9,
wherein, in the position in which the support elements (110, 112) have reached the minimum distance to each other, the second ends of the guide grooves (132, 134) are arranged at least approximately horizontally and above the central axis (A) of the cam plate (130).

11. The manipulating device (100) according to any of claims 7-10,
wherein the distance between the support elements (110, 112) in the receiving position and/or in the release position may be adapted dependent on the size of the sausage-shaped product to be manipulated.

12. The manipulating device (100) according to any of claims 7-11,
further comprising a guide block (160) including guide grooves (163, 164) into which the second ends (141b, 142b) of the pivot levers (141, 142) engage, for guiding the second ends (141b, 142b) of the pivot lever (141, 142).

13. The manipulating device (100) according to any of claims 1-12,
further comprising a control unit adapted for controlling at least the operation of the manipulating device (100).

14. The manipulating device (100) according to any of claims 1-13,
further comprising a sensor arrangement including at least one sensor device for at least detecting the presence or absence of a sausage-shaped product in the manipulating device (100).

15. A handling arrangement (200) for depositing horizontally oriented sausage-shaped products received from a clipping machine for producing sausage-shaped products, in a storage frame arranged in a loading position and having at least one storage place, the handling arrangement (200) comprises a manipulating device (100) according to claims 1-14.
